(19) Europäisches Patentamt
European Patent Office
Office européen des brevets

(11) EP 4 664 929 A1

(12) EUROPEAN PATENT APPLICATION

(43) Date of publication:
17.12.2025 Bulletin 2025/51

(21) Application number: 24182357.4

(22) Date of filing: 14.06.2024

(51) International Patent Classification (IPC):
H04R 25/00 (2006.01)    G06F 17/16 (2006.01)

(52) Cooperative Patent Classification (CPC):
H04R 25/507; G06F 17/16; G06N 3/00;
G06N 3/045; G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: GN Hearing A/S
2750 Ballerup (DK)

(72) Inventor: PEDERSEN, Brian Dam
DK-2750 Ballerup (DK)

(74) Representative: Aera A/S
Niels Hemmingsens Gade 10, 5th Floor
1153 Copenhagen K (DK)

Remarks:
A request for correction of the description has been
filed pursuant to Rule 139 EPC. A decision on the
request will be taken during the proceedings before
the Examining Division (Guidelines for Examination
in the EPO, A-V, 3.).

(54) **HEARING DEVICE WITH SPARSE MATRIX REPRESENTATION**

(57)    A hearing device is disclosed. The hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data. The hearing device comprises a receiver for converting the electrical output signal to an audio output signal.

Fig. 1

**Description**

The present disclosure relates to a hearing device and related methods including a method of operating a hearing device. In particular, hearing devices and methods with neural network processing of transducer input data, e.g. microphone input data, are presented.

BACKGROUND

Hearing devices implementing machine learning and deep neural networks (DNNs) attract increased attention, however DNNs are computationally costly and can potentially negatively impact the efficiency of a hearing device.

SUMMARY

Accordingly, there is a need for hearing devices and methods with improved implementation of DNNs.

A hearing device is disclosed. The hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data. The hearing device comprises a receiver for converting the electrical output signal to an audio output signal.

The hearing device comprises a memory having stored thereon a weight representation indicative of weights of a neural network based on the transducer input data. The weight representation comprises a first header. The weight representation comprises a first set of weights. The first set of weights comprises optionally a plurality of first weight matrices including a first primary weight matrix, and a first secondary weight matrix. The first header is indicative of a position of each of the plurality of first weight matrices in an initial weight representation of dimension K x J, e.g. in a sparse weight representation of dimension K x J. K and J are positive integers.

A method for providing a weight representation to process transducer input (e.g. transducer input data) of a hearing device is disclosed. The method is performed by an electronic device. The method comprises obtaining an initial weight representation, e.g. a sparse weight representation. The method comprises generating, based on the initial weight representation, a first weight representation indicative of weights of a neural network based on transducer input data. The first weight representation comprises a first header. The first weight representation comprises a first set of weights. The first set of weights comprises a plurality of first weight matrices including a first primary weight matrix, and a first secondary weight matrix. The first header is indicative of a position of each of the plurality of first weight matrices in the initial (e.g. sparse) weight representation of dimension K x J. K and J are positive integers.

It is an advantage of the present disclosure that the hearing device provides improved efficiency of processing of the transducer input data obtained by the hearing device. For example, power and memory efficient computing or processing is enabled by the use of sparse matrices. For example, while the use of sparse matrices requires an addition of storage (for example, to store the matrix headers), the gain in storage in this format increases quickly even at relatively small sizes, as the "zeroed" submatrices need not be stored, therefore requiring only non-zero submatrices to be stored by the hearing device. For example, the use of sparse matrices as described herein may be very space effective, with an overhead of 2 bytes per submatrix.

The hearing device may enable improved efficiency of computational calculations (for example, encoding and decoding) performed by the hearing device, thereby enabling increased processing efficiency through the use of forward-marked headers. For example, the header in the matrices, as described herein, may, rather than describe the matrices immediately following, describe the matrices one group ahead. For example, when computational processing begins, two headers are processed sequentially, which in turn helps pipelining on the vector value side, thus avoiding stalling for each submatrix.

It is an advantage of the present disclosure that the hearing device provides a compact representation from a sparse representation of weights of a neural network, for examples, a DNN. In a hearing device such as a hearing aid, when carrying out machine learning processes, space is often a highly limited resource and weights of the neural network can take a significant portion of the resources, such as memory and computational power.

Thus, a compact representation of a sparse matrix and efficient retrieval are advantageously provided in the disclosed hearing device.

BRIEF DESCRIPTION OF THE DRAWINGS

The above and other features and advantages of the present invention will become readily apparent to those skilled in the art by the following detailed description of example embodiments thereof with reference to the attached drawings, in which:

Fig. 1 schematically illustrates an exemplary hearing device according to this disclosure,

Fig. 2 is a flow diagram of an exemplary method according to this disclosure,

Fig. 3A-C schematically illustrates exemplary data storage matrices,

Figs. 4A-B schematically illustrates exemplary data storage matrices,

Fig. 5 schematically illustrates an example hearing devices according to the disclosure, and

Fig. 6 schematically illustrates one or more example electronic devices 400 according to the disclosure.

DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing device is disclosed. The hearing device comprises a set of input transducers for provision of transducer input data, the set of input transducers comprising a first input transducer for provision of a first transducer input signal as part of the transducer input data.

The hearing device comprises a processor for processing transducer input data and providing an electrical output signal based on the transducer input data. The hearing device comprises a receiver for converting the electrical output signal to an audio output signal.

The hearing device comprises a memory having stored thereon a weight representation indicative of weights of a neural network based on the transducer input data. The weight representation comprises a first header. The weight representation comprises a first set of weights. The first set of weights comprises optionally a plurality of first weight matrices including a first primary weight matrix, and a first secondary weight matrix. The first header is indicative of a position of each of the plurality of first weight matrices in an initial weight representation of dimension K x J, e.g. in a sparse weight representation of dimension K x J. K and J are positive integers.

The hearing device may be configured to be worn at an ear of a user and may be a hearable or a hearing aid, wherein the processor is configured to compensate for a hearing loss of a user.

In some examples, the hearing device may be an earbud, a headphone, or a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices.

The hearing device/transceiver module optionally comprises a radio transceiver coupled to the antenna for converting the antenna output signal to a transceiver input signal/transceiver input data. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device comprises a set of transducers, such as microphones. The set of transducers may comprise one or more transducers, e.g., one or more microphones. The set of transducers comprises a first transducer, such as a first microphone, for provision of a first transducer input signal and/or a second transducer, such as a second microphone, for provision of a second transducer input signal. The set of transducers may comprise J transducers for provision of J transducer signals, wherein J is an integer in the range from 1 to 10. In one or more exemplary hearing devices, the number J of transducers is two, three, four, five or more. The set of transducers may comprise a third transducer, such as a third microphone, for provision of a third transducer input signal.

The hearing device comprises a processor for processing input data/input signals, such as transceiver input signal(s)/data and/or microphone input data/-

signal(s). The processor is optionally configured to compensate for hearing loss of a user of the hearing device. The processor provides an electrical output signal based on the input data/input signals to the processor. For example, a transceiver input terminal of the processor may be connected to a transceiver for receiving transceiver input signal. One or more transducer input terminals of the processor may be connected to respective one or more transducers of the set of transducers.

The hearing device, such as the processor, optionally comprises a pre-processor for provision of the network input to the neural network based on the transducer input data.

The pre-processor may be connected to the radio transceiver for provision of the network input to the network based on the transceiver input signal. In one or more examples, the pre-processor may be configured to transform the transducer input data, such as microphone input data, and/or transceiver input data to the network input, e.g. by a conversion from a data type to the first data type, frequency transformation, log operations, or combinations thereof.

It is noted that descriptions and features of hearing device functionality, such as hearing device configured to access and/or store weights representations, also apply to methods and vice versa. For example, a description of a hearing device configured to determine also applies to a method, e.g. of operating a hearing device, wherein the method comprises determining and vice versa.

The hearing device comprises a processor for processing transducer input data, such as microphone input data, and providing an electrical output signal based on the transducer input data, such as the microphone input data. The processor may be configured to apply a neural network to a network input for provision of a network output, the network input based on the transducer input data, such as the microphone input data, for example based on the first transducer input signal and/or the second transducer input signal. The electrical output signal is based on, e.g. being a function of the network output. The network input and/or the transducer input data, such as the microphone input data, has a first data type. Parameters, such as weights, of the neural network may have a second data type different from the first data type of the network input/transducer input data. The hearing device comprises a receiver for converting the electrical output signal to an audio output signal.

The first transducer input signal can for example be a first microphone input signal from a first microphone. The second transducer input signal can for example be a second microphone input signal from a second microphone. In other words, the first microphone input signal may constitute the first transducer input signal and/or the second microphone input signal may constitute the second transducer input signal. The transducer input data, such as microphone input data, may be pre-processed, e.g. in a pre-processor external to or integrated in the processor, before being fed as network input to the neural network.

The processor may for example be configured to obtain, e.g., from or via the set of input transducers, the transducer input data. In other words, the processor may for example be configured to receive and/or retrieve, e.g., from or via the set of input transducers, the transducer input data.

The processor may for example be configured to generate, e.g., based on the transducer input data, an electrical output signal. For example, the processor may be configured to generate the electrical output signal, e.g., including to apply the neural network to the network input based on the transducer input data and/or transceiver input data.

The electrical output signal is for example an electrical output signal of the processor. The electrical output signal can for example be seen as an electrical signal provided by the processor as an output.

The neural network may for example be configured to take the transducer input data and/or preprocessed transducer input data as network input. The output of the neural network for example comprises the network output. The network output can for example be seen as an output of the neural network. The network output is for example based on the network input/transducer input data.

In some examples, the neural network may generate the network output, e.g., based on the transducer input data/network input. In some examples, the network output is provided, such as generated, based on the transducer input data. In other words, in some examples, the neural network is applied to the input transducer data and/or or to the network input, e.g., for provision, such as generation, of the network output. In one or more examples, the network input is based on the input transducer data such as the microphone input data. The network input may be based on transceiver input data from the transceiver module.

The receiver is for example configured to obtain, e.g., receive and/or retrieve the electrical output signal, such as from the processor. The receiver is for example configured to determine, such as generate the audio output signal, e.g., based on the electronic output signal. In some examples, the receiver is configured to provide, such as output, the audio output signal.

In one or more examples, a hearing device is disclosed, the hearing device comprising a set of input transducers for provision of transducer input data, the set of input transducers comprising a first input transducer for provision of a first transducer input signal as part of the transducer input data; a processor for processing transducer input data and providing an electrical output signal based on the transducer input data; and a receiver for converting the electrical output signal to an audio output signal, wherein the processor is configured to apply a neural network to a network input based on the transducer input data for provision of a network output based on the transducer input data, the electrical output signal based on the network output.

The weights for example be or comprise one or more fixed point numbers. For example, a value of the network in the neural network may be multiplied by a weight, such as by a fixed-point number. The weights can for example be seen as being or comprising one or more fixed point numbers, such as an 8-bit fixed number.

In some examples, the weights may be stored in one or more weight matrices or weight representations. In one or more examples, the weight representation represents a weight matrix, such a one or more weight matrices of the first layer and/or second layer of the neural network, e.g. a 192x128 matrix. In other words, one or more weight matrices of the first layer and/or second layer of the neural network may have at least 64 columns and at least 32 rows.

In one or more example hearing devices, the weights are N-bit numbers, e.g. where $N \leq 16$, e.g. in the range from 4 to 8. The weights can for example be seen as comprising one or more N-bit numbers. The N-bit number can for example be seen as a fixed-point number, e.g., comprising N bits. N may be 4, 5, 6, 7, or 8. In one or more examples, N may be in the range from 8 to 16.

The N-bit number may for example be a 4-bit number, a 6-bit number 8-bit number, etc. In one or more examples, the number of bits in the second data type is less than the number of bits in the first data type, i.e. N may be less than M. In one or more examples, the difference between M and N is at least three, such as 4 or 8. In one or more examples, the weights of the weight representation may be seen as an index parameter that subsequently may be mapped, e.g. via a look-up table, to respective weight values, such as weight values having more bits than the N-bit weights of the weight representation. In this way, e.g. a 4-bit weight of the weight representation may represent 8-bit weight values.

In one or more example hearing devices, the first input transducer is a first microphone for provision of a first microphone input signal as the first transducer input signal. The first input transducer may be an antenna, such as MI coil or BT antenna, for provision of a wirelessly received audio signal as the first transducer input signal. The first input transducer may be a vibration sensor for provision of a vibration input signal as the first transducer input signal. The vibration sensor is optionally configured for receiving body conducted signal from ear canal.

In one or more example hearing devices, the set of input transducers comprises a second input transducer, such as a second microphone, for provision of a second transducer input signal, such as a second microphone input signal, as part of the transducer input data.

For example, the transducer input signal may comprise a first transducer input signal and/or a second transducer input signal, the first transducer input signal being provided by a first input transducer of the set of input transducers and the second transducer input signal being provided by the second input transducer of the set of input transducers.

In one or more example methods, the neural network, such as one or more layers of the neural network, comprises K-bit multipliers, e.g. wherein $K \leq 8$.

The hearing device comprises a memory having stored thereon a weight representation. The weight representation is indicative of weights of a neural network disclosed herein. For example, the neural network is based on the transducer input data disclosed herein.

Weights are for example applied by the neural network in that the weights are applied to a network input based on the transducer input data for provision of a network output. The weights may be seen as parameters of the neural network that are associated with a connection between two nodes of the neural network, e.g. across various layers of the neural network and that are indicative of relation between the two nodes. Weights are representative for example of the relations between network input features and network output.

A weight representation can be seen as a representation of the weights of the neural network, such as a vector representation and/or a matrix representation and/or a weight matrix.

Some weight representation of neural networks can be sparse. For example, a weight representation is considered sparse when the number of zero or empty elements of the weight representation meets a criterion. For example, the weight representation is considered sparse when the number of non-zero or non-empty elements of the weight representation is roughly equal to or less than the number of rows or columns, and/or when the ratio of zero-valued elements to the total number of elements (KxJ for an KxJ matrix) is above a threshold and/or when the number of non-zero elements is significantly less than the total number of elements in the weight representation. In other words, for example, a sparse weight representation (e.g. a sparse matrix) is a weight representation (e.g. a matrix) that has relatively few non-zero elements. Stated differently, a weight representation is considered sparse when the sparsity property of the weight representation meets a criterion, where the sparsity property is for example the proportion of zero or empty elements in the weight representation, often measured as the number of zero or empty elements divided by the total number of elements of the weight representation.

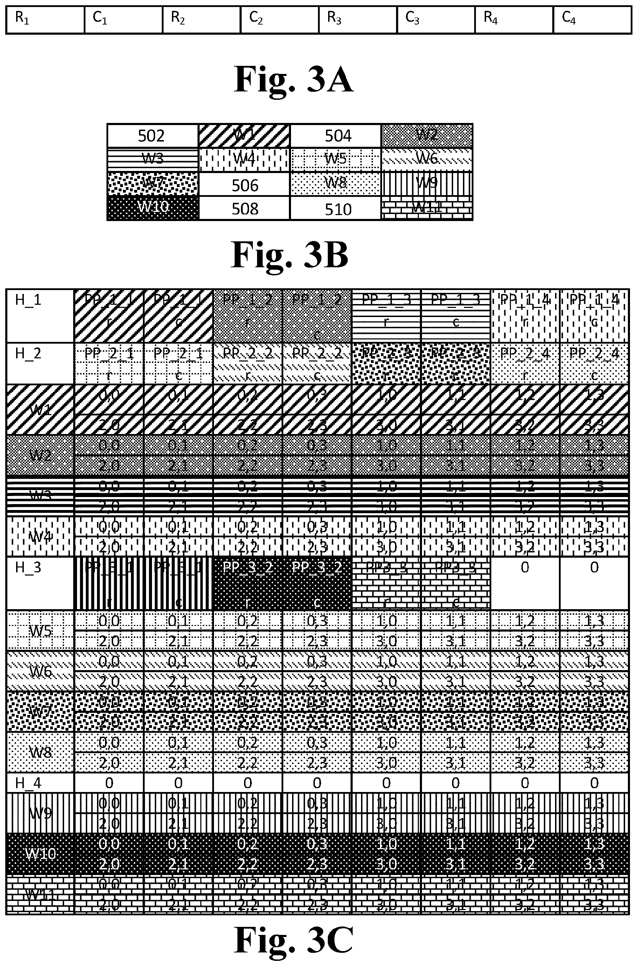

The weight representation comprises a first set of weights. The first set of weights comprises or represents a plurality of first weight matrices including a first primary weight matrix, and a first secondary weight matrix. In one or more examples, the first set of weights is represented by a plurality of first weight matrices. In one or more examples, the plurality of the first weight matrices includes a first primary weight matrix, for example, the submatrix W1, as depicted at Fig. 3B. In one or more examples, the plurality of the first weight matrices may include a first secondary weight matrix, such as submatrix W2, as depicted at Fig. 3B.

The weight representation comprises a first header. The first header is indicative of a position of each of the plurality of first weight matrices in the initial weight representation of dimension KxJ, and where K and J are positive integers. In one or more examples, the initial (e.g. sparse) weight representation may be of dimensions 16 bytes x 16 bytes, such as the matrix depicted at 3B. In one or more examples, the 16 bytes x 16-byte matrix may then be split into 4x4 matrices, where each matrix is 4 bytes x 4 bytes. Some of the submatrix may made of only zero elements, making the initial weight representation sparse.

The initial weight representation may comprise 2X2, 4X4, 8X8, 16X16, 32X32, 64X64, 128X128, 256X256 submatrices e.g. where each submatrix is a matrix with a plurality of rows and a plurality of columns, such as a 2x2 or a 4X4 matrix. In one or more examples, weights/values of a submatrix is an 8-bit, 12-bit, or 16 bit number.

The weight representation may be seen as a compact weight representation of the initial weight representation or weight matrix which may be sparse. The header, such as the first header, allows generating the initial weight representation which is sparse based on the compact representation. In other words, the header for examples permits reconstructing the initial weight representation from the compact weight representation where the zero elements have been removed for storage efficiency.

In one or more example hearing devices, the weight representation comprises a second header, and a second set of weights. The second set of weights comprises a plurality of second weight matrices including a second primary weight matrix, and a second secondary weight matrix. The second header is indicative of a position of each of the plurality of second weight matrices in the initial (e.g. sparse) weight representation of dimension K x J. In one or more examples, K and J are positive integers. As described herein, the sparse weight representation may be a matrix of dimensions 16x16 (for example, 16 bytes x 16 bytes). The 16x16 matrix may be subdivided into 4, 4x4 matrices of size 4 bytes x 4 bytes. An example second header H_2 is for example illustrated in Fig. 3C.

In one or more example hearing devices, the first header comprises a plurality of position parameters, each position parameter being indicative of a row and a column of a first weight matrix of the plurality of first weight matrices. This is for example illustrated in Fig. 3C.

In one or more example hearing devices, the processor is configured to obtain the first header and/or the second header.

In one or more example hearing devices, the processor is configured to process the plurality of first weight matrices according to the first header. In one or more example hearing devices, to process the plurality of first weight matrices according to the first header comprises loading the plurality of first weight matrices into a plurality of multipliers of the neural network.

In one or more example hearing devices, the processor is configured to obtain a third header after processing the plurality of first weight matrices. In one or more examples, the processor is configured to obtain the third header after processing the plurality of first weight matrices before processing the third header.

In one or more example hearing devices, the processor is configured to determine whether further weight matrices are to be processed. In one or more examples, the determining whether further weight matrices are to be processed may be based on at least one header. For example, the header can indicate that there are no further weight matrices to be processed. For example, the header H_1, depicted at Fig. 3C, may indicate there are further weight matrices to be processed. In one or more examples, H_4, also at Fig. 3C, may indicate there are no further weight matrices to be processed, for example, by indicating a zero or a blank. The header may indicate there are or are not further weight matrices to be processed in a different way than the one provided in the above example.

In one or more example hearing devices, the processor is configured to process weight matrices indicated by read headers in accordance with determining that the further weight matrices are not to be processed. In one or more examples, the processor is configured to process weight matrices indicated by the read headers until all weight matrices are processed, for example, until the processor determines, based on the header, that there are no further weight matrices to be processed.

In one or more example hearing devices, the processor is configured to read headers indicative of the further weight matrices in accordance with determining that the further weight matrices are to be processed.

In one or more example hearing devices, the weights are N-bit numbers, where $N \leq 8$.

In one or more example hearing devices, the neural network is a noise cancelling DNN, an environment classification DNN, or a feedback cancellation DNN.

In one or more example hearing devices, the neural network comprises one or more of: a noise cancelling DNN, an environment classification DNN, and a feedback cancellation DNN.

Noise cancelling Deep Neural Network, DNN, can be seen as a DNN configured for noise cancellation, such as noise reduction. For example, the noise cancelling DNN may be configured to cancel, such as reduce, noise present in the transducer input data.

Environment classification DNN can be seen as a DNN configured for environment classification. For example, the environment classification DNN may be configured to classify the environment in which the hearing device is located or operating. For example, when the hearing device is in an airplane, the environment classification DNN may be configured to classify the environment as an airplane environment. This may advantageously enable the hearing device to tailor or control other processing, such as one or more of noise cancellation, beamforming, voice pickup, feedback cancellation, and hearing compensation, to the environment in turn providing a hearing device with improved sound quality by improved quality and clarity of the audio output signal provided by the receiver, such as to a user of the hearing device.

Feedback cancellation DNN can be seen as a DNN configured for feedback cancellation, such as feedback reduction. For example, the feedback cancellation DNN may be configured to cancel or reduce feedback present in the transducer input data.

In some examples, processing the transducer input data comprises applying one or more of: the noise cancelling DNN, the environment classification DNN, and the feedback cancellation DNN, such as for provision of a network output based on the transducer input data.

The neural network of the hearing device may for example comprise a recursive neural network (RvNN).

The neural network may be a multilayer neural network. The neural network may comprise one or more fully connected layers. In one or more examples, the neural network comprises a first layer, a second layer, and optionally a third layer. The neural network may comprise at least three layers. The neural network may comprise less than eight layers. In one or more examples, the neural network is a 5-layer, recurrent neural network.

In one or more examples, the neural network is a multi-layer, recurrent neural network.

The neural network may be a recurrent neural network (RNN). The neural network may comprise one or more gated recurrent unit (GRU) layers, such as one or more GRU Type 1 layers and/or one or more GRU Type 2 layers. The neural network may comprise one or more Long short-term memory (LSTM) layers.

In one or more examples, the neural network comprises 2 to 6, such as 3, 4, or 5 GRU layers and optionally a fully connected layer.

The neural network may be defined by the number of layers and/or the number of nodes in each layer. Weights or parameters of a layer can for example be seen as indicative of the strength of a connection between two or more nodes of the neural network.

A layer or layers of the neural network, such as one or more or all of first layer, second layer, third layer, and fourth layer, may be a GRU layer, such as a GRU type-2 layer or a GRU type-1 layer. Each layer of the neural network has an input and an output.

In one or more examples, one or more or all of first layer, second layer, third layer, and fourth layer, comprise one or a plurality of elements applied to the layer input.

A layer, such as one or more or all of first layer, second layer, third layer, and fourth layer of the neural network comprises one or more elements including a first element, optionally a second element, and optionally a third element.

The neural network has weights being applied in the different layers of the neural network. The weights include first weights also denoted w_1_i1, the first weights applied in a first element of one or more layers of the neural network, optionally second weights also denoted w_2_i2, the second weights applied in a second element of one or more layers of the neural network, optionally third weights also denoted w_3_i3, the third weights applied in a third element of one or more layers of the neural network, where i1, i2, i3 are index numbers.

The layer of the neural network can for example be seen as a layer of nodes of the neural network, such as a layer of nodes at a given depth of the neural network.

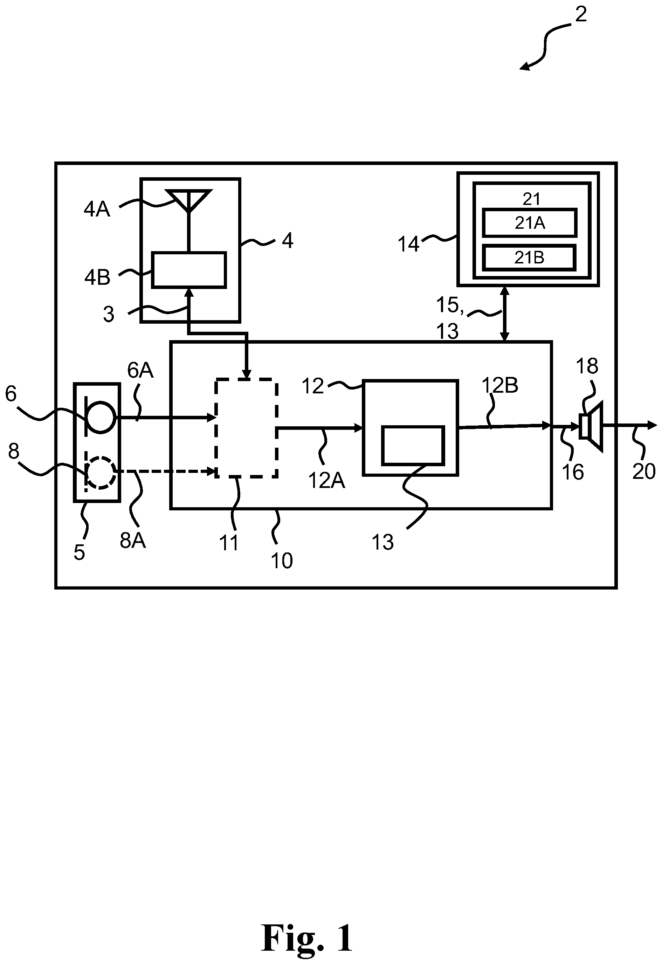

In one or more example hearing devices, the first input transducer is a first microphone for provision of a first microphone input signal as the first transducer input signal. This is for example illustrated in Fig. 1. In one or more example hearing devices, the set of microphones comprises a second input transducer for provision of a second transducer input signal as part of the transducer input data.

The present disclosure provides a method for providing a weight representation to process transducer input of a hearing device. The method is performed by an electronic device.

The method comprises obtaining an initial weight representation.

In one or more example methods, the initial weight representation is sparse. For example, the initial weight representation is sparse when a sparsity parameter of the initial weight representation meets a criterion, such as when the number of zero or empty elements of the weight representation meets the criterion, such as 20% or more, such as 12% or more, such as 10% or more. For example, the weight representation is considered sparse when the number of non-zero or non-empty elements of the weight representation is equal to or less than the number of rows or columns, and/or when the ratio of zero-valued elements to the total number of elements (KxJ for an KxJ matrix) is above a threshold (e.g., 20% or more, such as 12% or more, such as 10% or more) and/or when the number of non-zero elements is less than the total number of elements in the weight representation. For example, when the initial weight representation does not meet the criterion, and is thereby not sparse, there is no need to generate the first weight representation.

The method comprises generating, based on the initial weight representation, a first weight representation indicative of weights of a neural network based on transducer input data.

The first weight representation comprises a first set of weights. The first set of weights comprises a plurality of first weight matrices including a first primary weight matrix, and a first secondary weight matrix.

The first weight representation comprises a first header. The first header is indicative of a position of each of the plurality of first weight matrices in the initial weight representation of dimension K x J. K and J are positive integers. The header, such as the first header, allows generating the initial weight representation which is sparse based on the compact representation. In other words, the header for examples permits reconstructing the initial weight representation from the compact weight representation where the zero elements have been removed for storage efficiency.

The first weight representation is for example sent to a hearing device for storage in the memory as the first weight representation provides a more compact representation than the initial weight representation.

In one or more example methods, the first weight representation comprises a second header, and a second set of weights. In one or more example methods, the second set of weights comprises a plurality of second weight matrices including a second primary weight matrix, and a second secondary weight matrix.

In one or more example methods, the second header is indicative of a position of each of the plurality of second weight matrices in the initial weight representation of dimension K x J. In one or more example methods, K and J are positive integers.

In one or more example methods, the first header comprises a plurality of position parameters, each position parameter being indicative of a row and a column of a first weight matrix of the plurality of first weight matrices.

In one or more example methods, the method comprises providing the first weight representation, e.g. to a hearing device, such as transmitting the first weight representation to a hearing device. For example, the first weight representation is transmitted to a hearing device for storage in the memory of the hearing device.

Fig. 1 schematically illustrates an exemplary hearing device 2 according to this disclosure. The hearing device 2 optionally comprises a transceiver module 4 comprising an antenna 4A and a transceiver 4 for wireless communication with one or more external devices, such as a mobile phone and/or another hearing device. The transceiver 4B is for example configured to provide transceiver input data 3 to the processor 10 of the hearing device 2.

The hearing device 2 comprises a set of input transducers 5 for provision of transducer input data, the set of input transducers 5 comprising a first input transducer 6, such as a first microphone, for provision of a first transducer input signal 6A as part of the transducer input data. Optionally, the set of input transducers 5 comprises a second input transducer 8, such as a second microphone, for provision of a second transducer input signal 8A as part of the transducer input data. In one or more example hearing devices, the first input transducer 6 is a first microphone for provision of a first microphone input signal as the first transducer input signal 6A. In one or more example hearing devices, the set of microphones comprises a second input transducer 8 for provision of a second transducer input signal 8A as part of the transducer input data.

The hearing device 2 comprises processor 10 for processing transducer input data, such as first transducer input signal 6A and optionally second transducer input signal 8A, and providing an electrical output signal 16 based on the transducer input data. In one or more examples, the hearing device 2 comprises a receiver 18 for converting the electrical output signal 16 to an audio output signal 20. The hearing device 2, such as the processor 10, optionally comprises a pre-processor 11 for transforming input data, such as transducer input data from input transducers 5 and/or transceiver input data from transceiver module 4, to a network input 12A. The processor 10 is configured to apply a neural network 12 to the network input 12A based on the transducer input data and/or the transceiver input data for provision of a network output 12B based on the network input 12A. The network input 12A is based on the first transducer input data 6A and optionally the second transducer input data 8A, and the electrical output signal 16 is based on the network output 12B. For example, the network output 12B may be used as a control input for processing the input signals 6A, 8B, e.g. in a post-processor (not shown) according to the network output 12B. In one or more examples, the network output 12B may be transformed, e.g. in a post-processor, to form the electrical output signal 16.

The hearing device 2 comprises a memory 14, for example configured to communicate data 15, such as weights 13, and/or weight representations 21 with the processor 10 of the hearing device 2.

In one or more examples, the memory 14 has stored thereon a weight representation 21 indicative of a weight of a plurality of weights of a neural network based on the transducer input data. In one or more examples, the weigh representation 21 is seen as a compact weight representation, e.g. generated based on an initial weight representation which is sparse. The sparse initial weight representation is for example not stored in the memory but can be generated based on the weight representation 21 and temporarily stored for processing.

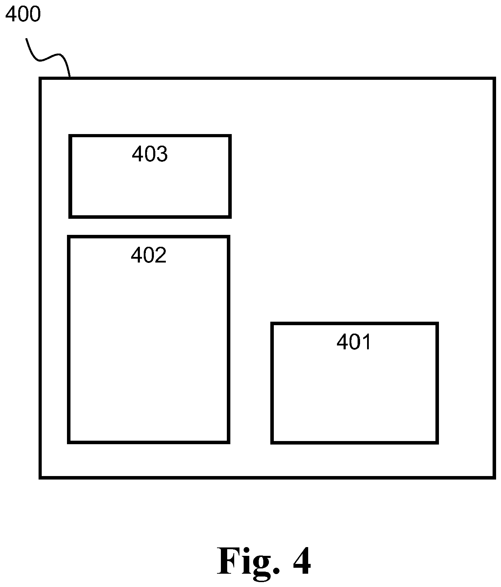

The weight representation 21 comprises a first set 21A of weights. The first set 21A of weights comprises a plurality of first weight matrices including a first primary weight matrix, and a first secondary weight matrix (as illustrated for example in Fig. 4B). In one or more example hearing devices, the weights 13 are N-bit numbers, where $N \leq 8$.

The weight representation 21 comprises a first header 21B. The first header 21B is indicative of a position of each of the plurality of first weight matrices in an initial weight representation of dimension K x J. K and J are positive integers.

In one or more example hearing devices, the first header 21B comprises a plurality of position parameters, each position parameter being indicative of a row and a column of a first weight matrix of the plurality of first weight matrices.

In one or more example hearing devices, the processor 10 is configured to obtain the first header 21B. In one or more example hearing devices, the processor 10 is configured to process the plurality of first weight matrices according to the first header 21B.

In one or more example hearing devices, to process the plurality of first weight matrices according to the first header 21B comprises loading the plurality of first weight matrices into a plurality of multipliers of the neural network 12.

The memory 14 may for example be configured to store transducer input data, weight representation 21 including a first set of weights 13, (optionally as floating-point number, fixed point number, M-bit number, N-bit number), K-bit multiplier, J-bit index parameter and/or the neural network in a part of the memory.

The operations of the processor 10 may be embodied in the form of executable logic routines, e.g., lines of code, software programs, etc., that are stored on a non-transitory computer readable medium, e.g., the memory 14, and are executed by the processor 10.

In one or more example hearing devices, the weight representation comprises a second header, and a second set of weights. The second set of weights comprises a plurality of second weight matrices including a second primary weight matrix, and a second secondary weight matrix. The second header is indicative of a position of each of the plurality of second weight matrices in the sparse weight representation of dimension K x J. K and J are positive integers. In one or more example hearing devices, the processor 10 is configured to obtain the first header 21B and/or the second header.

In one or more example hearing devices, the processor 10 is configured to obtain a third header after processing the plurality of first weight matrices.

In one or more example hearing devices, the processor 10 is configured to determine whether further weight matrices are to be processed. In one or more example hearing devices, the processor 10 is configured to process weight matrices indicated by read headers in accordance with determining that the further weight matrices are not to be processed.

In one or more example hearing devices, the processor 10 is configured to read headers indicative of the further weight matrices in accordance with determining that the further weight matrices are to be processed. This is for example illustrated in Fig. 3C.

In one or more example hearing devices, the neural network 12 is a noise cancelling DNN, an environment classification DNN, and/or a feedback cancellation DNN.

Furthermore, the operations of the hearing device 2 may be considered a method that the hearing device 2 is configured to carry out. Also, while the described functions and operations may be implemented in software, such functionality may as well be carried out via dedicated hardware or firmware, or some combination of hardware, firmware and/or software.

The memory 14 may be one or more of a buffer, a flash memory, a hard drive, a removable media, a volatile memory, a non-volatile memory, a random-access memory (RAM), or other suitable device. In a typical arrangement, the memory 14 may include a non-volatile memory for long term data storage and a volatile memory that functions as system memory for the processor 10. The memory 14 may exchange data with the processor 10 over a data bus (not shown). Control lines and an address bus between the memory 14 and the processor 10 also may be present (not shown in Fig. 1). The memory 14 is considered a non-transitory computer readable medium.

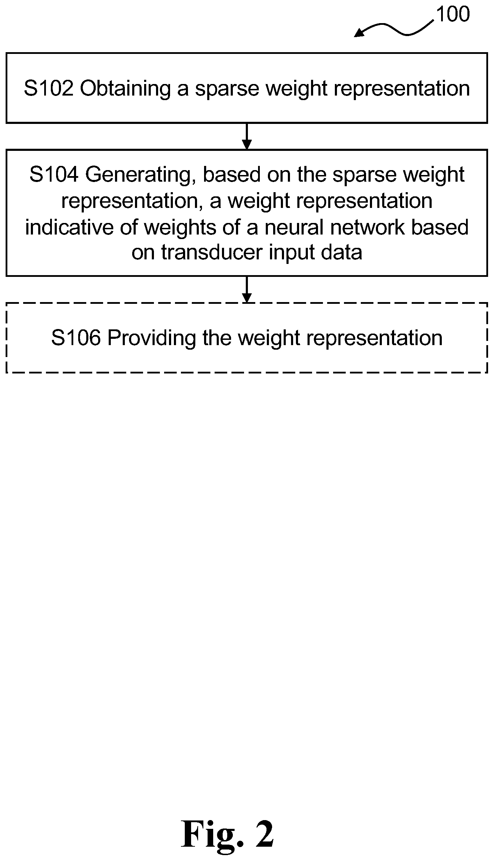

Fig. 2 is a flow diagram of an example method 100 for providing a weight representation to process transducer input of a hearing device is disclosed. The method 100 may be performed by a hearing device such as the hearing device 2 of Fig. 1.

A method 100 for providing a first weight representation to process transducer input of a hearing device is disclosed. The method 100 is performed by an electronic device.

The method 100 comprises obtaining S102 an initial weight representation. In one or more examples, the initial weight representation is sparse. For example, the initial weight representation is sparse when a sparsity parameter of the initial weight representation meets a criterion, such as when the number of zero or empty elements of the weight representation meets the criterion, such as 20% or more, such as 12% or more, such as 10% or more. For example, the weight representation is considered sparse when the number of non-zero or non-empty elements of the weight representation is equal to or less than the number of rows or columns, and/or when the ratio of zero-valued elements to the total number of elements (KxJ for an KxJ matrix) is above a threshold (e.g., 20% or more, such as 12% or more, such as 10% or more) and/or when the number of non-zero elements is less than the total number of elements in the weight representation

The method 100 comprises generating S104, based on the initial weight representation, the first weight representation indicative of weights of a neural network based on transducer input data. The first weight representation comprises a first set of weights. The first set of weights comprises a plurality of first weight matrices including a first primary weight matrix, and a first secondary weight matrix.

The first weight representation comprises a first header. The first header is indicative of a position of each of the plurality of first weight matrices in the first weight representation of dimension K x J. K and J are positive integers.

In one or more example methods, the first weight representation comprises a second header, and a second set of weights. In one or more example methods, the second set of weights comprises a plurality of second weight matrices including a second primary weight matrix, and a second secondary weight matrix. In one or more example methods, the second header is indicative of a position of each of the plurality of second weight matrices in the initial weight representation of dimension K x J. In one or more example methods, K and J are positive integers.

In one or more example methods, the first header comprises a plurality of position parameters, each position parameter being indicative of a row and a column of a first weight matrix of the plurality of first weight matrices.

In one or more example methods, the method 100 comprises S106 providing (e.g. transmitting to a hearing device) the first weight representation.

Fig. 3A-C schematically illustrates exemplary headers, initial weight representation, and weight representation according to this disclosure.

Fig. 3A depicts an example header, as described herein. In one or more examples, as described herein, it is possible to train a network so weight representation, so called weight matrices, become sparse. As described herein, in one or more examples, a sparse matrix is a matrix where a number of the 4x4 submatrices are zero or empty, and thus only the non-zero or non-empty matrices are encoded.

Initial (e.g. sparse) matrices may be encoded by adding an 8-byte header to a group of 4 matrices or submatrices. The header may have the format as depicted in Fig. 3A wherein Rn indicates the row position n of the 4x4 matrix and Cn indicates the column position of the 4x4 matrix so that (1,1) in the matrix is positioned at (4xRn, 4xCn). Therefore, as depicted in Fig. 3A, R1 and C1 represent a position (row and position) of the first submatrix W1 (4X4 matrix), R2 and C2 indicate position (row and position) of the second submatrix W2 (4X4 matrix), respectively, and so forth.

In one or more examples, if N is the number of rows divided by 4 (number of submatrix rows), then the following relation may be met:

$$R_{n+1} * N + C_{n+1} \geq R_n * N + C_n$$

Fig. 3B provides an example initial weight representation. Fig. 3B depicts a 16x16 matrix split into 4x4 submatrices. For clarity, the 16x16 matrix comprises weight matrices W1-W11, and 502, 504, 506, 508, 510. The 4x4 first weight matrices include for example first primary weight matrix 502, first secondary weight matrix W1, first tertiary weight matrix W3 and first quaternary weight matrix W4. The matrices W1-W11 denote non-zero submatrices. There are 11 in total. The matrices 502-510 denote zeroed or empty submatrices.

Fig. 3C depicts an example weight representation for the sparse initial weight representation of Fig. 3B in an 8-bit format. The initial sparse weight representation of Fig. 3B is represented by weight representation of Fig. 3C having the header and the non-zero matrices. The weight representation including the headers of Fig. 3C (e.g. in an 8-bit format) is a more compact representation that allows for the sparse weight representation of Fig. 3B to be regenerated and processed. The patterns of Fig. 3C correlate the matrices of the initial weight representation with the representation of Fig. 3C.

A header is used for each set of weights represented by a group of 4 submatrices, such as a first header H_1 for retrieving a first set of weights by indicating the position of the first weight matrices W1, W2, W3, and W4 in the initial weight representation of Fig. 3B, such as second header H_2 for retrieving a second set of weights by indicating the position of the second weight matrices W5, W6, W7, and W8 in the initial weight representation of Fig. 3B.

In one or more examples, for example, as depicted in Fig. 3C, H_1 and H_2 are appended back-to-back and processed consecutively (e.g., following right after the header) to help the pipelining on the memory side. Stated differently, the processor process H_1, H_2 before loading the weights of W1, W2, W3, W4. In other words, the header describes for example matrices that are one group ahead. In one or more examples, this means that when the computation starts, two headers are processed sequentially. In one or more examples, this is to help pipelining on the vector side, as it may help to avoid a stall for each matrix Wi.

For example, the first header H_1 is associated with the first matrices: W1, W2, W3, W4. As matrix 502 is zeroed or empty, H_1 comprises e.g. a position parameter for row: PP_1_1_r=1 and for column: PP_1_1_c=2, which indicates that the first primary matrix 502 of the initial weight representation is zeroed and to jump to W1 which is in row 1, column 2. The position parameters can be seen as an address for retrieving/providing the weights. For example, starting from the upper left corner of the weight representation, the first header, H_1 comprises position parameters for W1 (for example W1 of Fig. 3B) through W4 (for example, W4 of Fig. 3B). The position parameters each comprises a row indicator and column indicator, such as PP_1_1_r and PP_1_1_c, which indicates a first primary position parameter PP_1_1_r for a row position of submatrix W1, for example, 1 (see Fig. 3B) and a first primary position parameter PP_1_1_c for a column position of submatrix W1, for example 2 (see Fig. 3B).

The first secondary position parameter of H_1 comprises a row indicator and column indicator, PP1_2_r and PP_1_2_c, which indicate a first secondary position parameter for a row position of submatrix W2 and a first secondary position parameter for a column position of submatrix W2. For example, (PP1_2_r, PP1_2_c) = (1,4) as shown in Fig. 3B. In one or more examples, this position parameter combination points to the first column, and the fourth row; in other words, PP1_2 points to the submatrix labelled W2, for example, W2 of Fig. 3B.

The first tertiary position parameter of the first header H_1 comprises a row and column indicator, PP1_3_r and PP_1_3_c, which indicate a first tertiary position parameter for a row position of submatrix W3 and a first tertiary position parameter for a column position of submatrix W3. For example, (PP1_3_r, PP1_3_c) = (2,1) as shown in Fig. 3B. In one or more examples, this position parameter combination points to the first column, and the fourth row; in other words, PP1_2 points to W3, for example W3 of Fig. 3B. This pattern continues, as each position parameter combination points to a location in the 16x16 matrix of Fig. 3B.

The first quaternary position parameter of H_1 comprises a row and column indicator, PP1_4_r and PP_1 4 c, which indicate a first quaternary position parameter for a row position of submatrix W4 and a first quaternary position parameters for a column position of submatrix W4. For example, (PP_1_4_r, PP_1_4_c) = (2,2).

The second header, H_2, comprises a second position parameters directing matrices W5-W8. The second primary position parameter pointing to W5 comprises a row and column pointer, PP_2_1_r and PP_2_1_c, which indicate a second primary position parameter for a row position of submatrix W5 and a second primary position parameters for a column position of submatrix W5. For example, (PP_2_1_r, PP_2_1_c) = (2,3).

The second secondary position parameter pointing to W6 comprises a row and column pointer, PP_2_2_r and PP_2_2_c, which indicate a second secondary position parameter for a row position of submatrix W6 and a second secondary position parameter for a column position of submatrix W6. For example, (PP_2_2_r, PP_2_2_c) = (2,4).

The second tertiary position parameter pointing to W7 comprises a row and column pointer, PP_2_3_r and PP_2_3_c, which indicate a second tertiary position parameter for a row position of submatrix W7 and a second tertiary position parameters for a column position of submatrix W7. For example, (PP_2_3_r, PP_2_3_c) = (3,1).

The second quaternary position parameter pointing to W8 comprises a row and column pointer, PP_2_4_r and PP_2_4_c, which indicate a second quaternary position parameter for a row position of submatrix W8 and a second quaternary position parameters for a column position of submatrix W8. For example, (PP_2_4_r, PP_2_4_c) = (3,3).

The third header, H_3, comprises primary position parameters directing to matrices W9-W11. The third primary position parameter pointing to W9 comprises a row and column pointer, PP_3_1_r and PP_3_1_c, which indicate a third primary position parameter for a row position of submatrix W9 and a third primary position parameters for a column position of submatrix W9. For example, (PP_3_1_r, PP_3_1_c) = (3,4).

The third secondary position parameter pointing to W10 comprises a row and column pointer, PP_3_2_r and PP_3_2_c, which indicate a third secondary position parameter for a row position of submatrix W10 and a third secondary position parameters for a column position of submatrix W10. For example, (PP_3_2_r, PP_3_2_c) = (4,1).

The third tertiary position parameter pointing to W11 comprises a row and column pointer, PP_3_3_r and PP_3_3_c, which indicate a third tertiary position parameter for a row position of submatrix W11 and a third tertiary position parameters for a column position of submatrix W11. For example, (PP_3_3_r, PP_3_3_c) = (4,4).

The third quaternary position parameter is zero or empty to indicate that all submatrices have been included in the headers, H_1, H_2, H_3.

The fourth header, H_4, comprises a row of empty elements, indicated by "0". As described herein, when the device, for example, the processor of the hearing device, determines the further weight matrices are not to be processed, when, for example, the header is an empty or null.

Each of submatrices W1-W11 comprise a set or matrices of respective weights. For example, W1 comprises 16 bytes including, from left to right: (0,0), (0,1), (0,2), (0,3), (1,0), (1,1), (1,2), (1,3), (2,0), (2,1), (2,2), (2,3), (3,0), (3,1), (3,2), and (3,3). This is repeated for each of W2-W11 with respective weights. In one or more examples, a position parameter (0,0) (such as in H_3 and H_4) indicate for example, an end marker and there are no associated matrix to be evaluated.

The weight representation disclosed herein and illustrated in the example of Fig. 3C makes the weight representation effective in terms of memory storage and space. The overhead is 2 bytes per submatrix, so for an 8-bit representation is compensated already when 12 % of the submatrices are 0 or empty whereas for a 4-bit representation, the compensation is at 20% of sparsity.

For example, the initial sparse representation of Fig. 3B consumes 256 bytes whereas the weight representation of Fig. 3C consumes 208 bytes with no loss of information or sparsity information.

Fig. 4 schematically illustrates one or more example electronic devices 400 according to the disclosure. The electronic device 400 comprises memory circuitry 401. The electronic device 400 comprises processor circuitry 402. The electronic device 400 comprises an interface 403. The electronic device 400 may be configured to perform any of the processes disclosed in Fig. 2 (e.g., steps S102, S104 and S106 of Fig. 2). In other words, the electronic device 400 may be configured to provide a weight representation to process transducer input of a hearing device. The electronic device 400 may be an accessory device configured to communicate with a hearing device, such as hearing device disclosed herein, for example, in the hearing system depicted at Fig. 1.

The memory 401 may be one or more of a buffer, a flash memory, a hard drive, a removable media, a volatile memory, a non-volatile memory, a random-access memory (RAM), or other suitable device. In a typical arrangement, the memory 14 may include a non-volatile memory for long term data storage and a volatile memory that functions as system memory for the processor 402. The memory 401 may exchange data with the processor 402 over a data bus (not shown). Control lines and an address bus between the memory 401 and the processor 402 also may be present (not shown in Fig. 4). The memory 401 is considered a non-transitory computer readable medium.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

LIST OF REFERENCES

| | |
|---|---|
| 2 | hearing device |
| 3 | transceiver input data |
| 4 | transceiver module |
| 4A | antenna |
| 4B | transceiver |
| 5 | set of input transducers |
| 6 | first transducer, first microphone |
| 6A | first transducer input signal |
| 8 | second transducer |
| 8A | first transducer input signal |
| 10 | processor |
| 11 | pre-processor |
| 12 | neural network |
| 12A | network input |
| 12B | network output |
| 13 | weights of neural network |
| 14 | memory |
| 15 | data |
| 16 | electrical output signal |
| 18 | receiver |
| 20 | audio output signal |
| 100 | example method |
| 300 | hearing device |
| 301 | hearing device memory circuitry |
| 302 | hearing device processor circuitry |
| 303 | hearing device interface |
| 400 | electronic device |

401 electronic device memory circuitry
402 electronic device processor circuitry
403 electronic device interface
S102 obtaining an initial weight representation
S104 generating a first weight representation indicative of weights of a neural network
S106 providing the first weight representation

**Claims**

1. A hearing device comprising:

   a set of input transducers for provision of transducer input data, the set of input transducers comprising a first input transducer for provision of a first transducer input signal as part of the transducer input data;
   a processor for processing transducer input data and providing an electrical output signal based on the transducer input data;
   a receiver for converting the electrical output signal to an audio output signal; and
   a memory having stored thereon a weight representation indicative of weights of a neural network based on the transducer input data, wherein the weight representation comprises:

      a first header, and
      a first set of weights, wherein the first set of weights comprises a plurality of first weight matrices including a first primary weight matrix, and a first secondary weight matrix, wherein the first header is indicative of a position of each of the plurality of first weight matrices in an initial weight representation of dimension K x J, wherein K and J are positive integers.

2. Hearing device according to claim 1, wherein the weight representation comprises a second header, and a second set of weights, wherein the second set of weights comprises a plurality of second weight matrices including a second primary weight matrix, and a second secondary weight matrix, wherein the second header is indicative of a position of each of the plurality of second weight matrices in the initial weight representation of dimension K x J, wherein K and J are positive integers.

3. Hearing device according to claim 2, wherein the first header comprises a plurality of position parameters, each position parameter being indicative of a row and a column of a first weight matrix of the plurality of first weight matrices.

4. Hearing device according to any of claims 2-3, wherein the processor is configured to:

   obtain the first header and the second header;
   process the plurality of first weight matrices according to the first header; and
   obtain a third header after processing the plurality of first weight matrices.

5. Hearing device according to claim 4, wherein to process the plurality of first weight matrices according to the first header comprises loading the plurality of first weight matrices into a plurality of multipliers of the neural network.

6. Hearing device according to any of the previous claims, wherein the processor is configured to determine whether further weight matrices are to be processed.

7. Hearing device according to claim 6, wherein the processor is configured to process weight matrices indicated by read headers in accordance with determining that the further weight matrices are not to be processed.

8. Hearing device according to any of claims 6-7, wherein the processor is configured to read headers indicative of the further weight matrices in accordance with determining that the further weight matrices are to be processed.

9. Hearing device according to any one of the previous claims, wherein the weights are N-bit numbers, where $N \leq 8$.

10. Hearing device according to any of the previous claims, wherein the neural network is a noise cancelling DNN, an environment classification DNN, or a feedback cancellation DNN.

11. Hearing device according to any of the previous claims, wherein the first input transducer is a first microphone for provision of a first microphone input signal as the first transducer input signal.

12. Hearing device according to any of the previous claims, wherein the set of input transducers comprises a second input transducer for provision of a second transducer input signal as part of the transducer input data.

13. Method, performed by an electronic device, for providing a first weight representation to process transducer input of a hearing device, the method comprising:

   obtaining an initial weight representation;
   generating, based on the initial weight representation, the first weight representation indicative of weights of a neural network based on transducer input data, wherein the first weight representation comprises:

a first header, and
a first set of weights, wherein the first set of weights comprises a plurality of first weight matrices including a first primary weight matrix, and a first secondary weight matrix, wherein the first header is indicative of a position of each of the plurality of first weight matrices in the initial weight representation of dimension K x J, wherein K and J are positive integers.

14. Method according to claim 13, wherein the first weight representation comprises a second header, and a second set of weights, wherein the second set of weights comprises a plurality of second weight matrices including a second primary weight matrix, and a second secondary weight matrix, wherein the second header is indicative of a position of each of the plurality of second weight matrices in the initial weight representation of dimension K x J, wherein K and J are positive integers.

15. Method according to claim 14, wherein the first header comprises a plurality of position parameters, each position parameter being indicative of a row and a column of a first weight matrix of the plurality of first weight matrices.

**Fig. 1**

100

S102 Obtaining a sparse weight representation

S104 Generating, based on the sparse weight representation, a weight representation indicative of weights of a neural network based on transducer input data

S106 Providing the weight representation

# Fig. 2

| R₁ | C₁ | R₂ | C₂ | R₃ | C₃ | R₄ | C₄ |
|----|----|----|----|----|----|----|----|

## Fig. 3A

## Fig. 3B

## Fig. 3C

400

403

402

401

**Fig. 4**

EUROPEAN SEARCH REPORT

Application Number

EP 24 18 2357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/362559 A1 (BHOWMIK ACHIN [US] ET AL) 9 November 2023 (2023-11-09) | 1,5-7, 9-13,15 | INV. H04R25/00 |
| Y | * paragraphs [0026] - [0035], [0051]; figures 1, 2 * | 2-4,8,14 | G06F17/16 |
| Y | US 2020/159810 A1 (GHOSH CHINMAY [IN] ET AL) 21 May 2020 (2020-05-21) * paragraphs [0031] - [0041]; figures 5, 6 * | 2-4,8,14 | |
| A | Eding Matt: "Sparse Matrices", Python & Data Science Blog, 25 April 2019 (2019-04-25), pages 1-17, XP093225869, Retrieved from the Internet: URL:matteding.github.io/2019/04/25/sparse-matrices * the whole document * * section "Block Sparse Row" * | 1-15 | |

TECHNICAL FIELDS SEARCHED (IPC)

H04R
G06F

The present search report has been drawn up for all claims

| Place of search | Date of completion of the search | Examiner |
|---|---|---|
| The Hague | 20 November 2024 | Lörch, Dominik |

EPO FORM 1503 03.82 (P04C01)

## ANNEX TO THE EUROPEAN SEARCH REPORT
## ON EUROPEAN PATENT APPLICATION NO.

EP 24 18 2357

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | | Publication date | Patent family member(s) | | Publication date |
|---|---|---|---|---|---|
| US 2023362559 | A1 | 09-11-2023 | EP<br>US<br>WO | 4229876 A1<br>2023362559 A1<br>2022081260 A1 | 23-08-2023<br>09-11-2023<br>21-04-2022 |
| US 2020159810 | A1 | 21-05-2020 | NONE | | |

EPO FORM P0459

For more details about this annex : see Official Journal of the European Patent Office, No. 12/82